# EUROPEAN PATENT SPECIFICATION

(11) **EP 4 040 831 B1**
(45) Date of publication and mention of the grant of the patent: **08.04.2026**
(21) Application number: 20883862.3
(22) Date of filing: 06.11.2020
(51) Int. Cl.: H04W 16/14, H04W 24/02

(54) **INFORMATION PROCESSING METHOD AND RELATED DEVICE**
INFORMATIONSVERARBEITUNGSVERFAHREN UND ZUGEHÖRIGE VORRICHTUNG
PROCÉDÉ DE TRAITEMENT D'INFORMATIONS ET DISPOSITIF ASSOCIÉ

(30) Priority: 06.11.2019 CN 201911076792
(43) Date of publication of application: 10.08.2022
(73) Proprietor: Huawei Technologies Co., Ltd., Shenzhen, Guangdong 518129 (CN)
(72) Inventor: LIU, Zhihua, Shenzhen, Guangdong 518129 (CN); ZHANG, Zhengqing, Shenzhen, Guangdong 518129 (CN)
(74) Representative: Epping - Hermann - Fischer
(86) International application number: PCT/CN2020/127066
(87) International publication number: WO 2021/088976

(56) References cited:
- CN-A- 108 270 531
- CN-A- 108 289 336
- CN-A- 108 737 010
- US-A1- 2018 070 369
- US-A1- 2019 013 881
- US-A1- 2019 089 498
- US-A1- 2019 306 812

## Description

### TECHNICAL FIELD

Embodiments of this application relate to the communications field, and in particular, to an information processing method and a related device.

### BACKGROUND

Long term evolution LTE and 5G new radio NR new radio spectrum sharing is a technology that quickly introduces 5G to an existing LTE spectrum and extends LTE on a new 5G spectrum. This can effectively improve spectrum utilization.

LTE and NR spectrum sharing allows channel sharing based on real-time service requirements of LTE and NR. During spectrum sharing, inter-RAT channel interference between LTE and NR may occur. For example, when a reference signal is sent in LTE, a frequency domain resource in LTE needs to be occupied. In this case, if the frequency domain resource is shared in NR and LTE, mutual interference may occur on the same frequency domain resource when an NR side sends a message, affecting sending quality of the NR message.

US 2018/070369 A1 discloses a method of a user equipment operating with a new radio access technology. The method comprises receiving synchronization signals and a master information block in a first bandwidth and receiving a physical downlink control channel in a second BW, wherein the second BW is indicated by an offset in the MIB relative to the first BW and the PDCCH conveys a downlink control information format that configures a reception of a first system information block.

US 2019/013881 A1 discloses systems, methods, and instrumentalities are disclosed for transmitting a message. For example, a first radio access technology, RAT, and/or a second RAT may be determined. The first RAT may be determined for reception of data. The second RAT may be determined for the reception of the data, perhaps for example based on an indication received via the first RAT. The data may be received via a first node associated with the first RAT and a second node associated with the second RAT.

US 2019/306812 A1 discloses that a resynchronization signal may extend across multiple physical resource blocks or subframes, which may cause the RRS to be scheduled to overlap with other downlink transmissions. Methods, systems, and devices for wireless communications are described for management of RSS and one or more other transmission types that may have overlapping wireless resources with the RSS. If one or more other downlink transmissions are scheduled for resources that overlap with resources scheduled for an RSS transmission, the UE may receive the RSS transmission or the one or more other downlink transmissions, or a combination thereof, based on a prioritization of the transmission types of the one or more other downlink transmissions relative to RSS. The RSS transmission or the one or more other transmissions may be delayed, dropped, punctured, or rate-matched when the RSS transmission and the one or more other downlink transmissions conflict.

### SUMMARY

The invention is defined by the appended claims. Aspects or embodiments of the disclosure which do not fall under the scope of the claims are not included in the scope of invention. Embodiments of this application provide an information processing method according to claim 1 and a related device according to claim 10, to eliminate an interference signal existing when an NR message is sent, so that transmission quality of sending the NR message by a base station is improved. According to a claimed embodiment, a base station supporting a first radio access technology and a second radio access technology, the first radio access technology is a new radio NR radio access technology, and the second radio access technology is a long term evolution LTE radio access technology, obtaining by the base station, a time-frequency resource that is required for sending a target message by using the first radio access technology, and eliminating, by the base station, an interference signal to be sent on the time-frequency resource by using the second radio access technology, wherein the time-frequency resource is for sending the target message by using the first radio access technology, wherein a receiver of the target message does not support rate matching, RM, and the receiver is determined by the base station according to the target message, wherein the target message is a cell-level message; or the target message is sent by the base station to a first terminal, and the base station receives capability information from the first terminal, wherein the capability information indicates that the first terminal does not support RM, or the target message is sent by the base station to a first terminal, and the base station does not receive capability information from the first terminal, wherein the capability information indicates whether the first terminal supports RM, wherein before the base station completes radio resource control, RRC configuration with the first terminal, the base station does not receive the capability information from the first terminal, wherein the obtaining, by the base station, a time-frequency resource that is required for sending a target message by using the first radio access technology comprises:determining, by the base station based on information amount data and channel quality, the time-frequency resource that is required for sending the target message by using the first radio access technology, wherein the information amount data is obtained by the base station according to the target message, the information amount data comprises length information of the target message, and the channel quality is obtained by the base station through measurement.

A first aspect of embodiments of this application provides an information processing method, including the following steps.

A base station obtains a time-frequency resource that is required for sending a target message by using a first radio access technology, where the time-frequency resource is determined by a base station that receives the target message. When the first radio access technology and a second radio access technology are applied to the same base station, the base station receives the target message, and obtains, according to the target message, the time-frequency resource for sending the target message by using the first radio access technology. After obtaining the time-frequency resource, the base station eliminates an interference signal to be sent on the time-frequency resource by using the second radio access technology, and further sends the target message in a bandwidth corresponding to the time-frequency resource by using the first radio access technology.

When the first radio access technology and a second radio access technology are separately applied to different base stations, the base station to which the first radio access technology is applied receives the target message, and after determining the time-frequency resource according to the target message, sends a determining result to the base station to which the second radio access technology is applied. The base station to which the second radio access technology is applied obtains the time-frequency resource that is required for sending the target message by using the first radio access technology. After obtaining the time-frequency resource, the base station to which the second radio access technology is applied eliminates an interference signal to be sent on the time-frequency resource by using the second radio access technology, so that the base station to which the first radio access technology is applied can send the target message in a bandwidth corresponding to the time-frequency resource by using the first radio access technology.

In embodiments of this application, the base station eliminates the interference signal in the bandwidth corresponding to the time-frequency resource that is required for sending the target message by the base station, and sends the target message through the bandwidth corresponding to the time-frequency resource. Therefore, no interference is caused, and transmission quality of sending the target message to a terminal by the base station is improved.

A receiver of the target message does not support rate matching RM, and the receiver is determined by the base station according to the target message.

In embodiments of this application, only a target message that does not support sending in a rate matching RM manner is sent in a bandwidth in which an interference signal is eliminated, so that network utilization is improved.

The target message obtained by the base station is a cell-level message, that is, the target message is generated by the base station and is to be sent to a terminal in a cell or the target message is sent by the base station to a first terminal, and the base station receives capability information from the first terminal, wherein the capability information indicates that the first terminal does not support RM; or
the target message is sent by the base station to a first terminal, and the base station does not receive capability information from the first terminal, wherein the capability information indicates whether the first terminal supports RM. The message includes a system broadcast message or an initial configuration message.

Optionally, in a possible implementation, before the base station prepares to send the target message to a first terminal in the cell, the first terminal sends capability information to the base station, where the capability information indicates that the first terminal does not support receiving of the target message in a rate matching RM manner.

Optionally, in a possible implementation, before the base station prepares to send the target message to a first terminal in the cell, the first terminal does not send capability information to the base station, where the capability information indicates whether the first terminal supports receiving of the target message in a rate matching RM manner. In this case, the base station determines that the target message cannot be sent to the first terminal in a rate matching manner.

In embodiments of this application, the base station sends, in a bandwidth in which an interference signal is eliminated, several target messages that do not support sending in a rate matching RM manner. This avoids a problem that the target message that does not support sending in a rate matching RM manner is interfered with by the interference signal, and improves transmission quality of transmitting the target message by the base station.

Before the base station completes radio resource control RRC configuration with the first terminal in the cell, the base station does not receive the capability information from the first terminal, where the capability information indicates whether the first terminal supports receiving of the target message in a rate matching RM manner. In this case, the base station determines that the target message cannot be sent to the first terminal in a rate matching manner.

In embodiments of this application, the base station determines a terminal that does not complete radio resource control RRC configuration as a terminal that does not support receiving of target message in a rate matching RM manner, and further sends the target message in a bandwidth in which an interference signal is eliminated. This avoids a problem that the target message that does not support sending in a rate matching RM manner is interfered with by the interference signal, and improves transmission quality of transmitting the target message by the base station.

Optionally, in a possible implementation, the base station eliminates, by sending a cancellation signal, the interference signal to be sent in the bandwidth corresponding to the time-frequency resource by using the second radio access technology. The cancellation signal is generated by the base station, and is for canceling the interference signal.

In embodiments of this application, the base station eliminates, by sending the cancellation signal, the interference signal to be sent in the bandwidth corresponding to the time-frequency resource by using the second radio access technology, so that feasibility of the solution is improved.

The base station determines, based on information amount data and channel quality, the time-frequency resource that is required for sending the target message by using the first radio access technology, where the information amount data is obtained by the base station according to the target message, the information amount data includes length information of the target message, and the channel quality is obtained by the base station through measurement.

In embodiments of this application, the base station determines the time-frequency resource based on the information amount data and the channel quality, so that feasibility of the solution is improved.

Optionally, in a possible implementation, the base station eliminates, in a silence manner, the interference signal to be sent in the bandwidth corresponding to the time-frequency resource by using the second radio access technology. To be specific, a transmit power of the to-be-sent interference signal is adjusted to 0.

In embodiments of this application, the base station eliminates, in the silence manner, the interference signal to be sent in the bandwidth corresponding to the time-frequency resource by using the second radio access technology, so that feasibility of the solution is improved.

The first radio access technology is a new radio NR radio access technology, and the second radio access technology is a long term evolution LTE radio access technology.

In embodiments of this application, when the first radio access technology is the NR radio access technology, and the second radio access technology is the LTE radio access technology, feasibility of the solution is improved.

Optionally, in a possible implementation, the interference signal may be a cell-specific reference signal (CRS).

In embodiments of this application, when the interference signal is the cell-specific reference signal CRS, feasibility of the solution is improved.

Optionally, in a possible implementation, the interference signal may be a signal sent in a physical downlink control channel PDCCH.

In embodiments of this application, when the interference signal is the signal sent in the physical downlink control channel PDCCH, feasibility of the solution is improved.

Optionally, in a possible implementation, the interference signal may be a signal sent in a physical hybrid automatic repeat request (HARQ) indicator channel PHICH.

In embodiments of this application, when the interference signal is the signal sent in the physical hybrid automatic repeat request indicator channel PHICH, feasibility of the solution is improved.

Optionally, in a possible implementation, the interference signal may be a signal sent in a physical control format indicator channel PCFICH.

In embodiments of this application, when the interference signal is the signal sent in the physical control format indicator channel PCFICH, feasibility of the solution is improved.

Optionally, in a possible implementation, the time-frequency resource may include one or more of the following: a resource block RB, a resource element RE, a subcarrier space SCS, millisecond ms, a symbol (symbol), or a transmission time interval TTI.

In embodiments of this application, the time-frequency resource includes a resource block RB, a resource element RE, and the like, so that feasibility of the solution is improved.

A second aspect of an example useful for understanding the invention provides a base station, including:
an obtaining unit, configured to determine a time-frequency resource that is required for sending a target message by using a first radio access technology; and
an elimination unit, configured to eliminate an interference signal to be sent on the time-frequency resource by using a second radio access technology, where the time-frequency resource is for sending the target message by using the first radio access technology.

Optionally, in a possible implementation, a receiver of the target message does not support rate matching RM, and the receiver is determined by the base station according to the target message.

Optionally, in a possible implementation, the target message is a cell-level message; or
the target message is sent by the base station to a first terminal, and the base station receives capability information from the first terminal, where the capability information indicates that the first terminal does not support RM; or
the target message is sent by the base station to a first terminal, and the base station does not receive capability information from the first terminal, where the capability information indicates whether the first terminal supports RM.

Optionally, in a possible implementation, before the base station completes RRC configuration with the first terminal, the base station does not receive the capability information from the first terminal.

Optionally, in a possible implementation, the base station further includes:
a silence unit, configured to silence the interference signal to be sent on the time-frequency resource.

Optionally, in a possible implementation, the first radio access technology is a new radio NR radio access technology, and the second radio access technology is a long term evolution LTE radio access technology.

Optionally, in a possible implementation, the interference signal is a cell-specific reference signal CRS.

A third aspect of an example useful for understanding the invention provides a base station, including:
a processor, a memory, and an input/output interface, where the processor and the memory are connected to the input/output interface, the memory is configured to store program code, and when invoking the program code in the memory, the processor performs the method provided in the implementations of the first aspect of this application.

A fourth aspect of embodiments of this application provides a storage medium. It should be noted that the technical solutions of the present invention essentially, or the part contributing to the conventional technology, or all or a part of the technical solutions may be implemented in a form of a software product. The computer software product is stored in a storage medium, configured to store computer software instructions used by the foregoing device. The computer software instructions include a program designed for the base station to perform the first aspect.

The storage medium includes any medium that can store program code, such as a USB flash drive, a removable hard disk, a read-only memory (Read-Only Memory, ROM), a random access memory (Random Access Memory, RAM), a magnetic disk, or an optical disc.

A fifth aspect of an example useful for understanding the invention provides a computer program product including instructions. When the computer program product runs on a computer, the computer is enabled to perform the method in the implementations of the first aspect of this application.

The processor mentioned above may be a general-purpose central processing unit (Central Processing Unit, CPU), a microprocessor, or an application-specific integrated circuit (application-specific integrated circuit, ASIC).

A sixth aspect of an example useful for understanding the invention provides a chip system. The chip system includes a processor, configured to support a base station in implementing functions in the implementations of the first aspect of this application, for example, processing data and/or information in the foregoing method. In a possible design, the chip system further includes a memory. The memory is configured to store program instructions and data that are necessary for the base station. The chip system may include a chip, or may include a chip and another discrete device.

A seventh aspect of an example useful for understanding the invention provides a communications system, including at least one base station and a terminal. The base station is configured to implement the method in the implementations of the first aspect of this application. The terminal is configured to receive information sent by the base station.

An eighth aspect of this application provides a communications apparatus, including at least one processor, configured to invoke a program stored in a memory, to perform the method in the implementations of the first aspect of this application.

Optionally, the communications apparatus may be a base station or a chip in a base station.

Optionally, the communications apparatus may further include a memory.

It can be learned from the foregoing technical solutions that embodiments of this application have the following advantages:
In the solutions, the base station eliminates the interference signal in the bandwidth corresponding to the time-frequency resource that is required for sending the target message by the base station, and sends the target message through the bandwidth corresponding to the time-frequency resource. Therefore, no interference is caused, and transmission quality of sending the target message to the terminal by the base station is improved.

### BRIEF DESCRIPTION OF DRAWINGS

FIG. 1 is a schematic diagram of a framework of a communications system according to an embodiment of this application;
FIG. 2 is a schematic flowchart of an information processing method according to an embodiment of this application;
FIG. 3 is another schematic flowchart of an information processing method according to an embodiment of this application;
FIG. 4 is a schematic diagram of a structure of a base station according to an embodiment of this application;
FIG. 5 is a schematic diagram of another structure of a base station according to an embodiment of this application; and
FIG. 6 is a schematic diagram of another structure of a base station according to an embodiment of this application.

### DESCRIPTION OF EMBODIMENTS

An embodiment of this application provides an information processing method. During NR and LTE spectrum sharing, an interference signal in a bandwidth corresponding to a frequency domain resource required by a target message is eliminated, and the target message is sent by using the frequency domain resource. In this way, when a base station sends an NR message, the NR message is not interfered with by an LTE reference signal on the same frequency domain resource. This improves sending quality of sending the NR message by the base station.

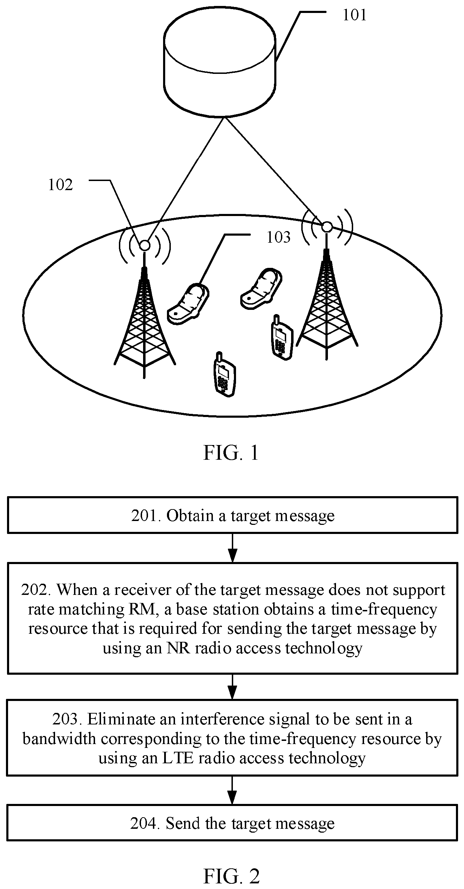

With reference to FIG. 1, a framework of a communications system according to an embodiment of this application includes the following.

An embodiment of this application provides a communications system. The communications system includes at least one base station 102 and at least one terminal 103. The one or more base stations are connected to a core network 101, and the one or more terminals may communicate with the at least one or more base stations. It should be noted that the base station and the terminal included in the communications system are merely examples. In embodiments of this application, types and a quantity of network elements included in the communications system, and a connection relationship between the network elements are not limited thereto.

The communications system in embodiments of this application may be a communications system that supports a fourth generation (fourth generation, 4G) access technology, for example, a long term evolution (long term evolution, LTE) access technology. Alternatively, the communications system may be a communications system that supports a third generation (third generation, 3G) access technology, for example, a universal mobile telecommunications system (universal mobile telecommunications system, UMTS) access technology. Alternatively, the communications system may be a communications system that supports a fifth generation (fifth generation, 5G) access technology, for example, a new radio (new radio, NR) access technology. Alternatively, the communications system may be a communications system that supports a plurality of radio access technologies, for example, a communications system that supports an LTE technology and an NR technology. It may be understood that the communications system may also be applicable to a future-oriented communications technology, for example, may be a communications system of a radio access technology such as 6G or 7G. This is not specifically limited herein.

The base station in embodiments of this application may be an access network-side device configured to support a terminal in accessing a communications system, for example, an evolved NodeB (evolved NodeB, eNB) in a communications system of a 4G access technology, or a next generation NodeB (next generation NodeB, gNB) in a communications system of a 5G access technology.

The terminal in embodiments of this application may be a device that provides a user with voice or data connectivity, and may also be referred to as user equipment (user equipment, UE), a mobile station (mobile station), a subscriber unit (subscriber unit), a station (station), terminal equipment (terminal equipment, TE), or the like. For example, the terminal may be a cellular phone (cellular phone), a personal digital assistant (personal digital assistant, PDA), a wireless modem (modem), a handheld (handheld) device, a laptop computer (laptop computer), a cordless phone (cordless phone), a wireless local loop (wireless local loop, WLL), a tablet computer (pad), or the like. With development of wireless communications technologies, the terminal may access a communications system and may communicate with a network side of the communications system, or may be a device that communicates with another object by using a communications system, an electricity meter reading device in a smart grid device, a voltage detection device, an environment detection device, a video surveillance device in a smart security network, a cash register, or the like.

Spectrum sharing can be for improving spectrum utilization for cells of different network standards. For example, when spectrum sharing is performed between LTE cells and NR cells, if coverage areas of the LTE cells and coverage areas of the NR cells are in a one-to-one correspondence, some of spectrum resources of one LTE cell may be shared to a corresponding NR cell. This improves spectrum utilization. LTE and NR spectrum sharing may be performed based on real-time service requirements of LTE and NR, to achieve millisecond (ms)-level dynamic spectrum sharing in time domain and frequency domain resource block (Resource Block, RB)-level dynamic spectrum sharing in frequency domain. For example, when a base station needs to send a 5-RB NR message, the base station may send the NR message on a 5-RB frequency domain resource in a corresponding subframe in a shared spectrum of LTE and NR. It should be noted that, in a 5G environment, a frequency domain bandwidth of a subcarrier space on an NR side may be 15 kHz, 30 kHz, 60 kHz, or the like. When the frequency domain bandwidth of the subcarrier space (Subcarrier Space, SCS) on the NR side is 30 kHz, that is, when 1 RB = 12 SCSs = 360 kHz, a frequency domain resource that is required for sending a message on the NR side is 5 RBs = 60 SCSs = 1800 kHz, and a time-frequency resource that needs to be shared on an LTE side is 1800 kHz = 120 SCSs = 10 RBs. Similarly, when the frequency domain bandwidth of the subcarrier space on the NR side is 60 kHz and the NR side sends a 5-RB message, a frequency domain resource that needs to be shared on an LTE side is 20 RBs. In an actual application process, a quantity of frequency domain resources RBs may be converted according to a specific situation. This is not specifically limited herein. In embodiments of this application, an example in which a subcarrier space specified by an NR base station is 15 kHz is used for description.

It may be understood that a specific application scenario in embodiments of this application is not limited to ms-level dynamic spectrum sharing and RB-level dynamic spectrum sharing. For example, there is a more detailed application scenario in a subsequent 6G or 7G field. This is not specifically limited herein.

For ease of understanding of embodiments, related terms used in this specification are first briefly described below.

Subcarrier space (Subcarrier Space, SCS): In LTE. a frequency domain bandwidth of a subcarrier space is 15 kHz; and in NR, a frequency domain bandwidth of a subcarrier space may be 15 kHz, 30 kHz, 60 kHz, or the like.

A frequency domain resource RB (Resource Block, RB) includes 12 subcarriers in frequency domain, and has a bandwidth of 180 kHz. RB is a basic unit for scheduling LTE and NR frequency domain resources.

Rate matching (Rate matching, RM) is a resource mapping mode defined in the 3GPP protocol, and is mainly used for mutual avoidance between channels.

The following describes an information processing method in embodiments of this application with reference to the framework of the communications system shown in FIG. 1.

In embodiments of this application, in a spectrum sharing environment, LTE and NR may be separately applied to two base stations, or may be applied to one base station. The following describes an example in which LTE and NR are applied to one base station.

For ease of description, in embodiments of this application, an example in which an NR radio access technology represents a first radio access technology, and an LTE radio access technology represents a second radio access technology is used for description.

As shown in FIG. 2, an embodiment of an information processing method in embodiments of this application includes the following steps.

201. A base station obtains a target message.

The base station obtains one or more target messages.

In terms of an obtaining manner, the target message may be sent by another base station to the base station through a core network. For example, when a software application server needs to send a system message to a terminal, the message is transmitted through the core network. When the message needs to be transmitted to the base station, the base station obtains the message from the core network.

It may be understood that the message may alternatively be obtained from another terminal in a cell, that is, the terminal in the cell sends the message to the NR base station. For example, when a first terminal in a cell needs to send a message to a second terminal in the cell, the base station receives the message sent by the first terminal. It may be understood that the target message may alternatively be obtained in another manner. For example, the target message may be generated by the base station. This is not specifically limited herein.

In terms of a type of the target message, the target message may include the following types:
Service information type: Such type of message is for transmitting information about service data to a terminal in a cell.

Initial configuration type: Such type of message is a system message and is for configuring a connection between a base station and a terminal.

Broadcast configuration type: Such type of message is generated by a base station and is for sending broadcast information to a terminal in a cell.

It may be understood that the target message may alternatively be another type of message. This is not specifically limited herein.

202. When a receiver of the target message does not support rate matching RM, the base station determines a time-frequency resource that is required for sending the target message by using an NR radio access technology.

After obtaining the target message, the base station determines the receiver of the target message. When the receiver does not support a rate matching RM sending manner, the base station determines the time-frequency resource that is required for sending the target message through NR.

When the receiver of the target message supports rate matching, the base station may send the message in a rate matching manner. When the base station sends the target message in the rate matching RM manner, an interference signal can be avoided in the corresponding time-frequency resource.

In this embodiment, that the base station determines whether the obtained target message supports sending in a rate matching RM manner includes the following cases.

When the target message obtained by the base station is a system-type message generated by the base station, the base station determines that the target message does not support sending in a rate matching RM manner. For example, when a type of the target message received by the base station is the initial configuration type, the base station determines that the target message does not support sending in a rate matching RM manner. It may be understood that the system-type message alternatively includes another type of message, for example, a message of the broadcast configuration type. In other words, when the target message received by the base station is a message of the broadcast configuration type, the base station determines that the target message does not support sending in a rate matching RM manner.

When the target message obtained by the base station is a message of the service information type, the base station determines, based on an RM capability message reported by a terminal that receives the target message, whether the target message supports RM. To be specific, when the RM capability message reported by the terminal indicates that the terminal supports an RM capability, the base station determines that the target message supports sending in an RM manner, or when the RM capability message reported by the terminal indicates that the terminal does not support an RM capability, the base station determines that the target message does not support sending in an RM manner.

It should be noted that, when the base station does not receive the RM capability message reported by the terminal, it is determined that the target message does not support sending in an RM manner. For example, before the base station completes RRC configuration with the terminal in the cell, the base station does not receive the RM capability message reported by the terminal, and therefore, it is determined that the message sent by the base station to the terminal does not support sending in an RM manner.

In this embodiment, the base station determines, in the following manners, the time-frequency resource that is required for sending the target message through NR.

When the base station obtains channel quality information of a bandwidth for sending the target message, the base station determines, based on a message length of the target message and the channel quality information of the bandwidth, the time-frequency resource that is required for sending the target message through NR, where the channel quality information indicates channel quality of the bandwidth. When a measured value of the channel quality is greater than a threshold, it indicates that the channel quality is good. In this case, less information is added to the target message in a redundancy coding manner, that is, fewer time-frequency resources are required for sending the target message through NR. When a measured value of the channel quality is less than a threshold, it indicates that the channel quality is poor. In this case, more information is added to the target message in a redundancy coding manner, that is, more time-frequency resources are required for sending the target message through NR.

For example, when the message length of the received target message is 180000 bits and an obtained measured value of the channel quality is greater than 90, an information amount of redundancy coding is 180000 bits, and the time-frequency resource for sending the target message is 2 RBs. When a measured value of channel quality is less than 70, an information amount of redundancy coding is 360000 bits, and the time-frequency resource for sending the target message is 3 RBs.

When the base station does not obtain channel quality information of a bandwidth for sending the target message, the base station determines, in a manner in which channel quality is less than a threshold, the time-frequency resource that is required for sending the target message through NR.

It should be noted that the threshold of the channel quality may be set according to an actual requirement. This is not limited herein. It may further be understood that corresponding redundancy coding manners may be different. This is not specifically limited herein.

203. Eliminate an interference signal to be sent in a bandwidth corresponding to the time-frequency resource.

After obtaining the time-frequency resource, the base station eliminates the interference signal to be sent in the bandwidth corresponding to the time-frequency resource.

The base station eliminates, in the following manners, the interference signal to be sent in the bandwidth corresponding to the time-frequency resource.

The base station eliminates, in a silence manner, the interference signal to be sent in the bandwidth corresponding to the time-frequency resource. To be specific, the base station reduces a transmit power of the interference signal corresponding to the time-frequency resource to 0.

The base station eliminates, by sending a cancellation signal, the interference signal to be sent in the bandwidth corresponding to the time-frequency resource. To be specific, the base station generates the cancellation signal, sets a parameter of the cancellation signal to corresponding to the interference signal, and sends the cancellation signal in the time-frequency resource corresponding to the interference signal.

The base station may eliminate, in different frequency bands of the bandwidth, the interference signal corresponding to the time-frequency resource. To be specific, the base station may eliminate, at a lowest-frequency position of the bandwidth, the interference signal corresponding to the time-frequency resource, or may eliminate, at a highest-frequency position of the bandwidth, the interference signal corresponding to the time-frequency resource. It may be understood that, the interference signal corresponding to the time-frequency resource may alternatively be eliminated in an intermediate frequency band of the bandwidth. This is not specifically limited herein.

For example, when the bandwidth is 10M, an amount of data transmitted in the bandwidth in 1 ms is 52 RBs. If the time-frequency resource is 20 RBs, the base station may eliminate an interference signal corresponding to 0 to 20 RBs in the bandwidth, or may eliminate an interference signal corresponding to 20 to 40 RBs in the bandwidth.

In this embodiment, the interference signal may include:
a cell-specific reference signal CRS;
a signal sent in a physical downlink control channel PDCCH; or
a signal sent in a physical HARQ indicator channel PHICH. It may be understood that the interference signal may alternatively be another type of interference signal, for example, a signal sent in a physical control format indicator channel PCFICH. This is not specifically limited herein.

204. The base station sends the target message to the terminal.

After eliminating the interference signal in the bandwidth corresponding to the time-frequency resource, the base station sends the target message to the terminal through the bandwidth corresponding to the time-frequency resource.

In this embodiment of this application, step 202 is an optional step, that is, regardless of whether the target message supports rate matching, the target message may be sent in a frequency band bandwidth in which an interference signal is eliminated.

In the solution, the base station eliminates the interference signal in the bandwidth corresponding to the time-frequency resource that is required for sending the target message by the base station, and sends the target message through the bandwidth corresponding to the time-frequency resource. Therefore, no interference is caused, and transmission quality of sending the NR message to the terminal by the base station is improved.

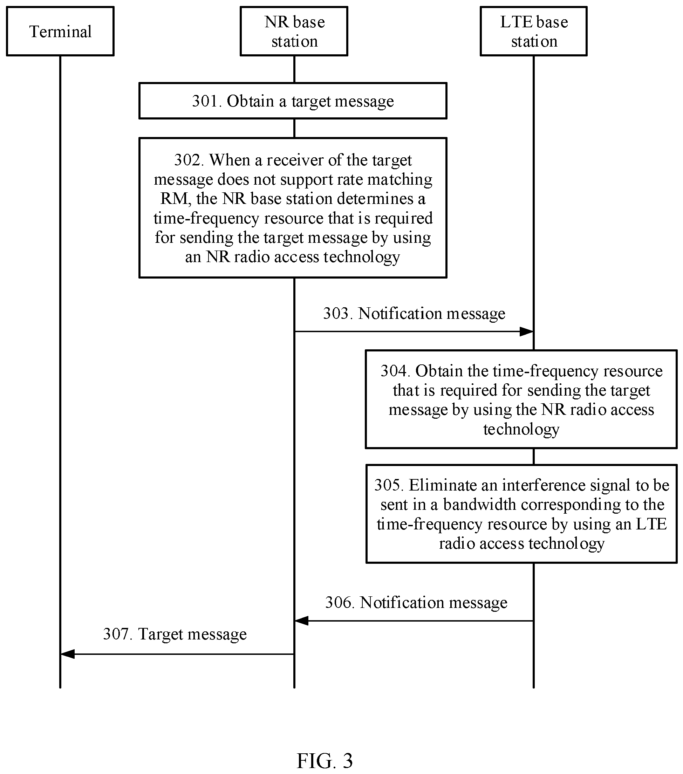

The foregoing describes the example in which NR and LTE are applied to one base station, and the following describes an example in which NR and LTE are separately applied to two base stations. As shown in FIG. 3, another method in embodiments of this application includes the following steps.

301. An NR base station obtains a target message.

The NR base station obtains one or more target messages.

In terms of an obtaining manner, the target message may be sent by another base station to the base station through a core network. For example, when a software application server needs to send a system message to a terminal, the message is transmitted through the core network. When the message needs to be transmitted to the base station, the base station obtains the message from the core network.

It may be understood that the message may alternatively be obtained from another terminal in a cell, that is, the terminal in the cell sends the message to the NR base station. For example, when a first terminal in a cell needs to send a message to a second terminal in the cell, the NR base station receives the message sent by the first terminal. It may be understood that the target message may alternatively be obtained in another manner. For example, the target message may be generated by the NR base station. This is not specifically limited herein.

In terms of a type of the target message, the target message may include the following types:
Service information type: Such type of message is for transmitting information about service data to a terminal in a cell.

Initial configuration type: Such type of message is a system message and is for configuring a connection between a base station and a terminal.

Broadcast configuration type: Such type of message is generated by a base station and is for sending broadcast information to a terminal in a cell.

It may be understood that the target message may alternatively be another type of message. This is not specifically limited herein.

302. When a receiver of the target message does not support rate matching RM, the NR base station determines a time-frequency resource that is required for sending the target message by using an NR radio access technology.

After obtaining the target message, the NR base station determines the receiver of the target message. When the receiver does not support a rate matching RM sending manner, the NR base station determines the time-frequency resource that is required for sending the target message through NR.

When the receiver of the target message supports rate matching, the NR base station may send the message in a rate matching manner. When the NR base station sends the target message in the rate matching RM manner, an interference signal can be avoided in the corresponding time-frequency resource.

In this embodiment, that the NR base station determines whether the obtained target message supports sending in a rate matching RM manner includes the following cases.

When the target message obtained by the NR base station is a system-type message generated by the NR base station, the NR base station determines that the target message does not support sending in a rate matching RM manner. For example, when a type of the target message received by the NR base station is the initial configuration type, the NR base station determines that the target message does not support sending in a rate matching RM manner. It may be understood that the system-type message alternatively includes another type of message, for example, a message of the broadcast configuration type. In other words, when the target message received by the NR base station is a message of the broadcast configuration type, the NR base station determines that the target message does not support sending in a rate matching RM manner.

When the target message obtained by the NR base station is a message of the service information type, the NR base station determines, based on an RM capability message reported by a terminal that receives the target message, whether the target message supports sending in an RM manner. To be specific, when the RM capability message reported by the terminal indicates that the terminal supports an RM capability, the NR base station determines that the target message supports sending in an RM manner, or when the RM capability message reported by the terminal indicates that the terminal does not support an RM capability, the NR base station determines that the target message does not support sending in an RM manner.

It should be noted that, when the NR base station does not receive the RM capability message reported by the terminal, it is determined that the target message does not support sending in an RM manner. For example, before the NR base station completes RRC configuration with the terminal in the cell, the NR base station does not receive the RM capability message reported by the terminal, and therefore, it is determined that the message sent by the base station to the terminal does not support sending in an RM manner.

In this embodiment, the NR base station determines, in the following manners, the time-frequency resource that is required for sending the target message through NR.

When the NR base station obtains channel quality information of a bandwidth for sending the target message, the NR base station determines, based on a message length of the target message and the channel quality information of the bandwidth, the time-frequency resource that is required for sending the target message through NR, where the channel quality information indicates channel quality of the bandwidth. When a measured value of the channel quality is greater than a threshold, it indicates that the channel quality is good. In this case, less information is added to the target message in a redundancy coding manner, that is, fewer time-frequency resources are required for sending the target message through NR. When a measured value of the channel quality is less than a threshold, it indicates that the channel quality is poor. In this case, more information is added to the target message in a redundancy coding manner, that is, more time-frequency resources are required for sending the target message through NR.

For example, when the message length of the received target message is 180000 bits and an obtained measured value of the channel quality is greater than 90, an information amount of redundancy coding is 180000 bits, and the time-frequency resource for sending the target message is 2 RBs. When a measured value of channel quality is less than 70, an information amount of redundancy coding is 360000 bits, and the time-frequency resource for sending the target message is 3 RBs.

When the NR base station does not obtain channel quality information of a bandwidth for sending the target message, the NR base station determines, in a manner in which channel quality is less than a threshold, the time-frequency resource that is required for sending the target message through NR.

It should be noted that the threshold of the channel quality may be set according to an actual requirement. This is not limited herein. It may further be understood that corresponding redundancy coding manners may be different. This is not specifically limited herein.

303. The NR base station sends a notification message to an LTE base station.

When the NR base station determines the time-frequency resource that is required for sending the target message by using the NR radio access technology, the NR base station sends the notification message to the LTE base station, where the notification message indicates the time-frequency resource that is required for sending the target message by using the NR radio access technology. To be specific, the notification message includes but is not limited to the following information: a frequency domain resource RB that is required for sending the target message through NR radio access, and a subframe for sending the target message.

304. Obtain a first time-frequency resource that is required for sending the target message by using the NR radio access technology.

When receiving the notification message, the LTE base station reads the notification message, to further obtain the time-frequency resource that is required for sending the target message by using the NR radio access technology.

305. Eliminate an interference signal to be sent in a bandwidth corresponding to the time-frequency resource.

After obtaining the time-frequency resource, the LTE base station eliminates the interference signal to be sent in the bandwidth corresponding to the time-frequency resource.

The LTE base station eliminates, in the following manners, the interference signal to be sent in the bandwidth corresponding to the time-frequency resource.

The LTE base station eliminates, in a silence manner, the interference signal to be sent in the bandwidth corresponding to the time-frequency resource. For example, the LTE base station reduces a transmit power of the interference signal corresponding to the time-frequency resource to 0.

The LTE base station eliminates, by sending a cancellation signal, the interference signal to be sent in the bandwidth corresponding to the time-frequency resource. To be specific, the LTE base station generates the cancellation signal, sets a parameter of the cancellation signal to corresponding to the interference signal, and sends the cancellation signal in the time-frequency resource corresponding to the interference signal.

The LTE base station may eliminate, in different frequency bands of the bandwidth, the interference signal corresponding to the time-frequency resource. To be specific, the LTE base station may eliminate, at a lowest-frequency position of the bandwidth, the interference signal corresponding to the time-frequency resource, or may eliminate, at a highest-frequency position of the bandwidth, the interference signal corresponding to the time-frequency resource. It may be understood that, the interference signal corresponding to the time-frequency resource may alternatively be eliminated in an intermediate frequency band of the bandwidth. This is not specifically limited herein.

For example, when the bandwidth is 10M, an amount of data transmitted in the bandwidth in 1 ms is 52 RBs. If the time-frequency resource is 20 RBs, the base station may eliminate an interference signal corresponding to 0 to 20 RBs in the bandwidth, or may eliminate an interference signal corresponding to 20 to 40 RBs in the bandwidth.

In this embodiment, the interference signal may include:
a cell-specific reference signal CRS;
a signal sent in a physical downlink control channel PDCCH; or
   a signal sent in a physical HARQ indicator channel PHICH. It may be understood that the interference signal may alternatively be another type of interference signal, for example, a signal sent in a physical control format indicator channel PCFICH. This is not specifically limited herein.

306. The LTE base station sends a notification message to the NR base station.

After the LTE base station eliminates the interference signal in the bandwidth corresponding to the time-frequency resource, the LTE base station sends the notification message to the NR base station, where the notification message indicates that the LTE base station eliminates the interference signal in the bandwidth corresponding to the time-frequency resource.

307. The NR base station sends the target message to the terminal.

After the NR base station receives the notification message, the NR base station reads the notification message to obtain information indicating that the LTE base station eliminates the interference signal in the bandwidth corresponding to the time-frequency resource, and then sends the target message to the terminal through the bandwidth corresponding to the time-frequency resource.

In an actual application process, if the target message supports sending in an RM manner, the target message may alternatively be sent in a frequency band bandwidth in which an interference signal is eliminated. This is not limited in embodiments of this application.

In this embodiment, the LTE base station eliminates the interference signal in the bandwidth corresponding to the time-frequency resource that is required for sending the target message and the NR base station sends the target message in the bandwidth corresponding to the time-frequency resource, so that the target message can be sent without interference at every millisecond. This saves time and improves efficiency, compared with a method in which a specific subframe needs to be waited for sending an NR message through MBSFN without interference.

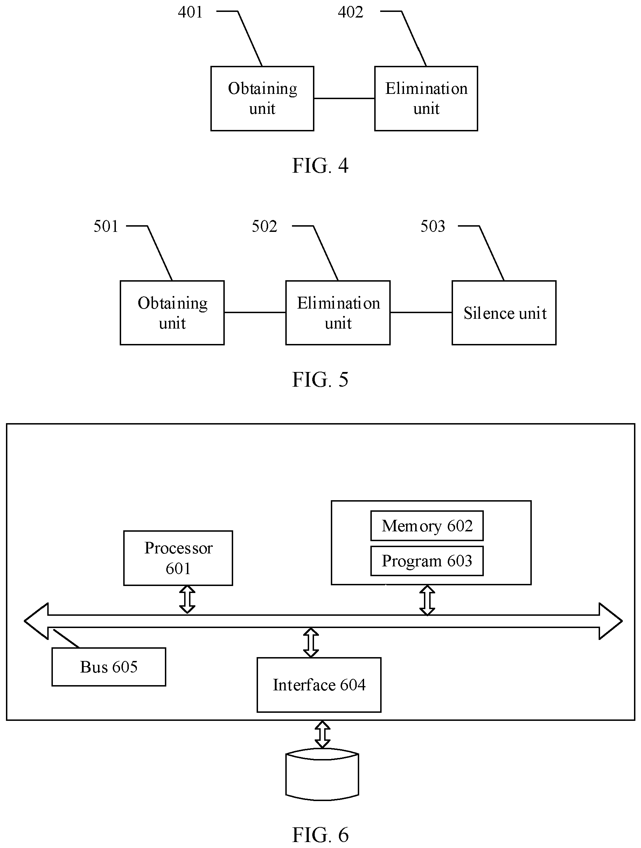

The foregoing describes the information processing method in embodiments of this application. The following describes a base station in embodiments of this application. As shown in FIG. 4, an embodiment of a base station in embodiments of this application includes:
an obtaining unit 401, configured to determine a time-frequency resource that is required for sending a target message by using a first radio access technology; and
an elimination unit 402, configured to eliminate an interference signal to be sent on the time-frequency resource by using a second radio access technology, where the time-frequency resource is for sending the target message by using the first radio access technology.

In this embodiment, operations performed by units of the base station are similar to those described in the embodiment shown in FIG. 2 or FIG. 3, and details are not described herein again.

As shown in FIG. 5, another embodiment of a base station in embodiments of this application includes:
an obtaining unit 501, configured to determine a time-frequency resource that is required for sending a target message by using a first radio access technology; and
an elimination unit 502, configured to eliminate an interference signal to be sent on the time-frequency resource by using a second radio access technology, where the time-frequency resource is for sending the target message by using the first radio access technology.

A receiver of the target message does not support rate matching RM, and the receiver is determined by the base station according to the target message.

The target message is a cell-level message.

Alternatively, the target message is sent by the base station to a first terminal, and the base station receives capability information from the first terminal, where the capability information indicates that the first terminal does not support RM.

Alternatively, the target message is sent by the base station to a first terminal, and the base station does not receive capability information from the first terminal, where the capability information indicates whether the first terminal supports RM.

Before the base station completes RRC configuration with the first terminal, the base station does not receive the capability information from the first terminal.

The base station further includes a silence unit 503, configured to silence the interference signal to be sent on the time-frequency resource.

The first radio access technology is a new radio NR radio access technology, and the second radio access technology is a long term evolution LTE radio access technology.

The interference signal is a cell-specific reference signal CRS.

In this embodiment, operations performed by units of the base station are similar to those described in the embodiment shown in FIG. 2 or FIG. 3, and details are not described herein again.

As shown in FIG. 6, another embodiment of a base station in embodiments of this application is as follows.

The base station includes components such as a processor 601, a memory 602, a bus 605, and an interface 604. The processor 601 is connected to the memory 602 and the interface 604. The bus 605 is separately connected to the processor 601, the memory 602, and the interface 604. The interface 604 is configured to receive or send data. The processor 601 is a single-core or multi-core central processing unit, or an application-specific integrated circuit, or one or more integrated circuits configured to implement embodiments of the present invention. The memory 602 may be a random access memory (Random Access Memory, RAM), or may be a non-volatile memory (non-volatile memory), for example, at least one hard disk memory. The memory 602 is configured to store computer-executable instructions. Specifically, the computer-executable instructions may include a program 603.

In this embodiment, the processor 601 may perform operations performed by the base station in the embodiment shown in FIG. 2 or FIG. 3, and details are not described herein again.

An embodiment of this application further provides a computer-readable storage medium, and the computer-readable storage medium stores a computer program. When the computer program is executed by a computer, a method procedure related to the base station in any one of the foregoing method embodiments is implemented.

It should be understood that the processor mentioned in the base station, a chip system, or the like in the foregoing embodiments of this application, or the processor provided in the foregoing embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that there may be one or more processors in the base station, the chip system, or the like in the foregoing embodiments of this application. The quantity may be adjusted based on an actual application scenario. This is merely an example for description herein, and is not limited. There may be one or more memories in embodiments of this application. The quantity may be adjusted based on an actual application scenario. This is merely an example for description herein, and is not limited.

It should be further understood that in embodiments of this application, the memory, the readable storage medium, or the like mentioned in the base station, the chip system, or the like in the foregoing embodiments may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be further noted that when the base station includes a processor (or a processing unit) and a memory, the processor in this application may be integrated with the memory, or may be connected to the memory by using an interface. This may be adjusted based on an actual application scenario, and is not limited.

An embodiment of this application further provides a computer program or a computer program product including the computer program. When the computer program is executed on a computer, the computer is enabled to implement a method procedure related to the base station in any one of the foregoing method embodiments.

The foregoing embodiments in FIG. 2 and FIG. 3 may be all or partially implemented by using software, hardware, firmware, or any combination thereof. When software is for implementing the embodiments, the embodiments may be all or partially implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a Solid State Disk (SSD)), or the like.

It may be clearly understood by a person skilled in the art that, for convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected depending on actual requirements to achieve the objectives of the solutions of embodiments.

In addition, function units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, another network device, or the like) to perform all or some of the steps of the methods in the embodiments in FIG. 2 to FIG. 6 of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

In the specification, claims, and the accompanying drawings of this application, the terms "first", "second", and the like are intended to distinguish similar objects but do not necessarily indicate a specific order or sequence. It should be understood that the terms used in such a way are interchangeable in proper circumstances. This is merely a discrimination manner that is used when objects having a same attribute are described in embodiments of this application. In addition, the terms "include", "have", and any variants thereof mean to cover the non-exclusive inclusion, so that a process, method, system, product, or device that includes a series of units is not necessarily limited to those units, but may include other units not expressly listed or inherent to such a process, method, product, or device.

Names of messages/frames/information, modules, units, or the like provided in embodiments of this application are merely examples, and other names may be used provided that the messages/frames/information, modules, units, or the like have same functions.

The terms used in embodiments of this application are merely for the purpose of illustrating specific embodiments, and are not intended to limit the present invention. The terms "a", "the", and "this" of singular forms used in embodiments of this application are also intended to include plural forms, unless otherwise specified in the context clearly. It should be further understood that, in description of this application, "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural.

Depending on the context, for example, words "if" or "provided that" used herein may be explained as "while" or "when" or "in response to determining" or "in response to detecting". Similarly, depending on the context, phrases "if determining" or "if detecting (a stated condition or event)" may be explained as "when determining" or "in response to determining" or "when detecting (the stated condition or event)" or "in response to detecting (the stated condition or event)".

## Claims

1. An information processing method, wherein a base station supports a first radio access technology and a second radio access technology, the first radio access technology is a new radio NR radio access technology, and the second radio access technology is a long term evolution LTE radio access technology, and the method comprises:
obtaining (202), by the base station, a time-frequency resource that is required for sending a target message by using the first radio access technology, and
eliminating (203), by the base station, an interference signal to be sent on the time-frequency resource by using the second radio access technology, wherein the time-frequency resource is for sending the target message by using the first radio access technology, wherein a receiver of the target message does not support rate matching, RM, and the receiver is determined by the base station according to the target message, wherein the target message is a cell-level message; or
the target message is sent by the base station to a first terminal, and the base station receives capability information from the first terminal, wherein the capability information indicates that the first terminal does not support RM; or
the target message is sent by the base station to the
first terminal, and the base station does not receive capability information from the first terminal, wherein the capability information indicates whether the first terminal supports RM, wherein before the base station completes radio resource control, RRC configuration with the first terminal, the base station does not receive the capability information from the first terminal,
wherein the obtaining, by the base station, a time-frequency resource that is required for sending a target message by using the first radio access technology comprises:
determining, by the base station based on information amount data and channel quality, the time-frequency resource that is required for sending the target message by using the first radio access technology, wherein the information amount data is obtained by the base station according to the target message, the information amount data comprises length information of the target message, and the channel quality is obtained by the base station through measurement.

2. The method according to claim 1, wherein the eliminating (203), by the base station, an interference signal on the time-frequency resource comprises:
silencing, by the base station, the interference signal to be sent on the time-frequency resource.

3. The method according to any one of claims 1 to 2, wherein the eliminating (203), by the base station, an interference signal on the time-frequency resource comprises:
sending, by the base station, a cancellation signal on the time-frequency resource, wherein the cancellation signal is for canceling the interference signal on the time-frequency resource.

4. The method according to any one of claims 1 to 3, wherein the interference signal is a cell-specific reference signal, CRS.

5. The method according to any one of claims 1 to 3, wherein the interference signal is a signal sent in a physical downlink control channel, PDCCH.

6. The method according to any one of claims 1 to 3, wherein the interference signal is a signal sent in a physical hybrid automatic repeat request indicator channel, PHICH.

7. The method according to any one of claims 1 to 3, wherein the interference signal is a signal sent in a physical control format indicator channel, PCFICH.

8. The method according to any one of claims 1 to 7, wherein the time-frequency resource comprises at least one of the following: a resource block, RB, a resource element, RE, a subcarrier space, SCS, millisecond, ms, a symbol, and a transmission time interval, TTI.

9. A computer readable storage medium, wherein the computer readable storage medium stores instructions, and when the instructions are executed on a computer, the computer is enabled to perform the method according to any one of claims 1 to 8.

10. A communications apparatus, configured to perform the method according to any one of claims 1 to 8.

11. A computer program product comprising instructions which, when the program is executed by a computer, cause the computer to carry out the method of any of claims 1 to 8.

## Patentansprüche

1. Informationsverarbeitungsverfahren, wobei eine Basisstation eine erste Funkzugangstechnologie und eine zweite Funkzugangstechnologie unterstützt, die erste Funkzugangstechnologie eine "New Radio"-Funkzugangstechnologie bzw. NR-Funkzugangstechnologie ist, die zweite Funkzugangstechnologie eine Langzeitentwicklungs-Funkzugangstechnologie bzw. LTE-Funkzugangstechnologie ist und das Verfahren Folgendes umfasst:
Erhalten (202) durch die Basisstation eines Zeit/Frequenz-Betriebsmittels, das zum Senden einer Zielnachricht unter Verwendung der ersten Funkzugangstechnologie erforderlich ist; und
Beseitigen (203) durch die Basisstation eines Interferenzsignals, das im Zeit/Frequenz-Betriebsmittel unter Verwendung der zweiten Funkzugangstechnologie gesendet werden soll, wobei das Zeit/Frequenz-Betriebsmittel zum Senden der Zielnachricht unter Verwendung der ersten Funkzugangstechnologie dient, ein Empfänger der Zielnachricht einen Ratenabgleich, RM, nicht unterstützt und der Empfänger durch die Basisstation gemäß der Zielnachricht bestimmt wird, wobei die Zielnachricht eine Nachricht auf Zellenebene ist; oder
die Zielnachricht wird durch die Basisstation zu einem ersten Endgerät gesendet und die Basisstation empfängt Leistungsfähigkeitsinformationen vom ersten Endgerät, wobei die Leistungsfähigkeitsinformationen angeben, dass das erste Endgerät RM nicht unterstützt; oder
die Zielnachricht durch die Basisstation zum ersten Endgerät gesendet wird und die Basisstation keine Leistungsfähigkeitsinformationen vom ersten Endgerät empfängt,
wobei die Leistungsfähigkeitsinformationen angeben, ob das erste Endgerät RM unterstützt, und bevor die Basisstation eine Funkbetriebsmittelsteuerungs-Konfiguration, RRC-Konfiguration, mit dem ersten Endgerät abschließt, die Basisstation die Leistungsfähigkeitsinformationen vom ersten Endgerät nicht empfängt,
wobei das Erhalten durch die Basisstation eines Zeit/Frequenz-Betriebsmittels, das zum Senden einer Zielnachricht unter Verwendung der ersten Funkzugangstechnologie erforderlich ist, Folgendes umfasst:
Bestimmen, durch die Basisstation auf der Grundlage von Informationsmengendaten und einer Kanalqualität des Zeit/Frequenz-Betriebsmittels, das zum Senden der Zielnachricht unter Verwendung der ersten Funkzugangstechnologie erforderlich ist, wobei die Informationsmengendaten durch die Basisstation gemäß der Zielnachricht erhalten werden, die Informationsmengendaten Längeninformationen der Zielnachricht umfassen und die Kanalqualität durch die Basisstation mittels Messung erhalten wird.

2. Verfahren nach Anspruch 1, wobei das Beseitigen (203) durch die Basisstation eines Interferenzsignals im Zeit/Frequenz-Betriebsmittel Folgendes umfasst:
Dämpfen durch die Basisstation des Interferenzsignals, das im Zeit/Frequenz-Betriebsmittel gesendet werden soll.

3. Verfahren nach einem der Ansprüche 1 bis 2, wobei das Beseitigen (203) durch die Basisstation eines Interferenzsignals im Zeit/Frequenz-Betriebsmittel Folgendes umfasst: Senden durch die Basisstation eines Unterdrückungssignals im Zeit/Frequenz-Betriebsmittel, wobei das Unterdrückungssignal zum Unterdrücken des Interferenzsignals im Zeit/Frequenz-Betriebsmittel dient.

4. Verfahren nach einem der Ansprüche 1 bis 3, wobei das Interferenzsignal ein zellenspezifisches Bezugssignal, CRS, ist.

5. Verfahren nach einem der Ansprüche 1 bis 3, wobei das Interferenzsignal ein Signal ist, das in einem physischen Abwärtsstreckensteuerkanal, PDCCH, gesendet wurde.

6. Verfahren nach einem der Ansprüche 1 bis 3, wobei das Interferenzsignal ein Signal ist, das in einem physischen Indikatorkanal hybrider automatischer Wiederholungsanforderungen, PHICH, gesendet wurde.

7. Verfahren nach einem der Ansprüche 1 bis 3, wobei das Interferenzsignal ein Signal ist, das in einem physischen Steuerformatindikatorkanal, PCFICH, gesendet wurde.

8. Verfahren nach einem der Ansprüche 1 bis 7, wobei das Zeit/Frequenz-Betriebsmittel mindestens eines der Folgenden umfasst: einen Betriebsmittelblock, RB, ein Betriebsmittelelement, RE, eine Unterträgerraum, SCS, Millisekunde, ms, ein Symbol und ein Übertragungszeitintervall, TTI.

9. Computerlesbares Speichermedium, wobei das computerlesbare Speichermedium Befehle speichert und dann, wenn die Befehle in einem Computer ausgeführt werden, ermöglicht wird, dass der Computer das Verfahren nach einem der Ansprüche 1 bis 8 durchführt.

10. Kommunikationsvorrichtung, die konfiguriert ist, das Verfahren nach einem der Ansprüche 1 bis 8 durchzuführen.

11. Computerprogrammprodukt das Befehle enthält, die, wenn das Programm durch einen Computer ausgeführt wird, den Computer veranlassen, das Verfahren nach einem der Ansprüche 1 bis 8 auszuführen.

## Revendications

1. Procédé de traitement d'informations, dans lequel une station de base prend en charge une première technologie d'accès radio et une seconde technologie d'accès radio, la première technologie d'accès radio est une technologie d'accès radio New Radio, NR, et la seconde technologie d'accès radio est une technologie d'accès radio d'évolution à long terme, LTE, et le procédé comprend :
l'obtention (202), par la station de base, d'une ressource temps-fréquence qui est requise pour envoyer un message cible à l'aide de la première technologie d'accès radio ; et
l'élimination (203), par la station de base, d'un signal d'interférence à envoyer sur la ressource temps-fréquence à l'aide de la seconde technologie d'accès radio, dans lequel la ressource temps-fréquence est destinée à envoyer le message cible à l'aide de la première technologie d'accès radio, dans lequel un récepteur du message cible ne prend pas en charge la correspondance de débit, RM, et le récepteur est déterminé par la station de base en fonction du message cible, dans lequel le message cible est un message au niveau de la cellule ; ou
le message cible est envoyé par la station de base à un premier terminal, et la station de base reçoit des informations de capacité depuis le premier terminal, dans lequel les informations de capacité indiquent que le premier terminal ne prend pas en charge la RM ; ou
le message cible est envoyé par la station de base au premier terminal, et la station de base ne reçoit pas d'informations de capacité depuis le premier terminal, dans lequel les informations de capacité indiquent si le premier terminal prend en charge la RM ou non, dans lequel avant que la station de base achève la configuration de commande de ressource radio, RRC, avec le premier terminal, la station de base ne reçoit pas les informations de capacité depuis le premier terminal,
dans lequel l'obtention, par la station de base, d'une ressource temps-fréquence qui est requise pour envoyer un message cible à l'aide de la première technologie d'accès radio comprend :
la détermination, par la station de base sur la base de données de quantité d'informations et d'une qualité de canal, de la ressource temps-fréquence qui est exigée pour envoyer le message cible à l'aide de la première technologie d'accès radio, dans lequel les données de quantité d'informations sont obtenues par la station de base en fonction du message cible, les données de quantité d'informations comprennent des informations de longueur du message cible, et la qualité de canal est obtenue par la station de base par l'intermédiaire d'une mesure.

2. Procédé selon la revendication 1, dans lequel l'élimination (203), par la station de base, d'un signal d'interférence sur la ressource temps-fréquence comprend :
le blocage, par la station de base, du signal d'interférence à envoyer sur la ressource temps-fréquence.

3. Procédé selon l'une quelconque des revendications 1 à 2, dans lequel l'élimination (203), par la station de base, d'un signal d'interférence sur la ressource temps-fréquence comprend :
l'envoi, par la station de base, d'un signal d'annulation sur la ressource temps-fréquence, dans lequel le signal d'annulation est destiné à annuler le signal d'interférence sur la ressource temps-fréquence.

4. Procédé selon l'une quelconque des revendications 1 à 3, dans lequel le signal d'interférence est un signal de référence spécifique à la cellule, CRS.

5. Procédé selon l'une quelconque des revendications 1 à 3, dans lequel le signal d'interférence est un signal envoyé dans un canal physique de commande de liaison descendante, PDCCH.

6. Procédé selon l'une quelconque des revendications 1 à 3, dans lequel le signal d'interférence est un signal envoyé dans un canal physique indicateur de demande de répétition automatique hybride, PHICH.

7. Procédé selon l'une quelconque des revendications 1 à 3, dans lequel le signal d'interférence est un signal envoyé dans un canal physique indicateur de format de commande, PCFICH.

8. Procédé selon l'une quelconque des revendications 1 à 7, dans lequel la ressource temps-fréquence comprend au moins l'un des éléments suivants : un bloc de ressource, RB, un élément de ressource, RE, un espace de sous-porteuse, SCS, milliseconde, ms, un symbole, et un intervalle temporel de transmission, TTI.

9. Support de stockage lisible par ordinateur, dans lequel le support de stockage lisible par ordinateur stocke des instructions, et lorsque les instructions sont exécutées sur un ordinateur, l'ordinateur est amené à exécuter le procédé selon l'une quelconque des revendications 1 à 8.

10. Appareil de communication, configuré pour exécuter le procédé selon l'une quelconque des revendications 1 à 8.

11. Produit programme informatique comprenant des instructions qui, lorsque le programme est exécuté par un ordinateur, amènent l'ordinateur à exécuter le procédé selon l'une quelconque des revendications 1 à 8.
